# EUROPÄISCHE PATENTSCHRIFT

(11) **EP 3 359 083 B1**
(45) Veröffentlichungstag und Bekanntmachung des Hinweises auf die Patenterteilung: **02.03.2022**
(21) Anmeldenummer: 16778063.4
(22) Anmeldetag: 07.10.2016
(51) Int. Cl.: A61C 17/22, A46B 11/00, A46B 15/00, A46B 7/04, A46B 13/04

(54) **ZAHNBÜRSTE**
TOOTHBRUSH
BROSSE À DENTS

(30) Priorität: 09.10.2015 DE 202015105354 U
(43) Veröffentlichungstag der Anmeldung: 15.08.2018
(73) Patentinhaber: J.G. Hambrock-Edition, 20537 Hamburg (DE)
(72) Erfinder: SCHEUREN, Axel, 21244 Buchholz (DE)
(74) Vertreter: Hauck Patentanwaltspartnerschaft mbB
(86) Internationale Anmeldenummer: PCT/EP2016/074078
(87) Internationale Veröffentlichungsnummer: WO 2017/060474

(56) Entgegenhaltungen:
- AT-A1- 505 109
- CN-U- 2 081 671
- DE-A1- 3 925 860
- DE-A1- 10 023 725
- DE-U- 7 416 094
- DE-U1- 9 007 098
- DE-U1- 29 514 599
- DE-U1-202011 002 334
- US-B1- 7 677 827

## Beschreibung

Die vorliegende Erfindung betrifft eine Zahnbürste mit einem Griffabschnitt und einem Bürstenkopf.

Zahnbürsten gibt es in den verschiedensten Formen, Farben, Längen und Ausgestaltungen. Der Bürstenkopf der Zahnbürste kann über einen elektrischen Antrieb verfügen und Bürsten in verschiedenen Härtegraden aufweisen. Zahnbürsten werden in der Regel zusammen mit Zahnpasta, insbesondere in Form von Zahncreme oder sonstigen Zahnreinigungsmitteln verwendet. Auch Zahnbleichmittel und andere kosmetisch oder medizinisch wirkende Mittel werden nachfolgend als Zahnpasta angesprochen. Diese werden üblicherweise aus einer separaten Tube oder einem sonstigen Vorratsbehälter auf den Bürstenkopf aufgetragen. Diese Auftragsweise ist umständlich, zeitaufwendig und führt immer wieder dazu, dass die Zahnpasta vom Bürstenkopf abfällt und erneut aufgebracht werden muss.

Aus US 2012/0103355 A1 ist eine Zahnbürste mit einer Abgabeeinrichtung für Zahnpasta bekannt. Die Zahnbürste besitzt einen Griffabschnitt und einen Bürstenkopf. Der Bürstenkopf besitzt eine Austrittsöffnung, die über einen Kanal mit einem Zahnpastavorrat verbunden ist. Der Zahnpastavorrat besitzt eine Kammer zur Aufnahme der Zahnpasta, in dem eine über ein Stellrad drehbare Gewindespindel angeordnet ist. Über die Gewindespindel kann eine Stellplatte entlang der Spindel verstellt werden, um durch eine Volumenverkleinerung Zahnpasta über den Kanal in den Bürstenkopf zu drücken.

Aus WO 2011/035011 ist eine Zahnbürste mit einem schwenkbar im Griff gelagerten Reservoir bekannt geworden. In einer ersten Stellung ist der Inhalt des Reservoirs nicht mit dem Kanal verbunden und Zahnpasta kann nicht in den Bürstenkopf gefördert werden. In einer zweiten Stellung wird ein Verschluss an dem Reservoir geöffnet und durch Druck auf das Reservoir kann Zahnpasta durch den Kanal in den Bürstenkopf gefördert werden.

Aus WO 2004/088547 ist eine Zahnbürste bekannt geworden, deren Zahnpastavorrat eine Kartusche mit zwei verschiedenen Zahnreinigungsmitteln eingesetzt werden kann.

Aus US 2011/0067193 A1 ist eine Zahnbürste mit einem Hohlraum im Griff bekannt geworden, wobei der Hohlraum eine Eingangsöffnung besitzt. Das Reservoir besitzt eine Größe, um eine ausreichende Menge an Zahnpasta aufzunehmen und an den Bürstenkopf abzugeben. Die Abgabe erfolgt über Druck auf einen elastisch ausgebildeten Abschnitt der Zahnbürste.

Aus DE 103 37 062 A1 ist eine Zahnbürste mit Zahnbürstenkopf und Zahnpastabehälter bekannt geworden. Der Zahnpastabehälter weist ein Griffschalenteil auf, der in den Griffteil eingesetzte Zahnpastabehälter, wobei ein in den Griffteil eingesetzter Zahnpastabehälter einen Teil der äußeren Oberfläche des Griffs bildet, wobei durch Druck auf den weich-elastischen Zahnpastabehälter Zahnpasta herausgedrückt werden kann.

Aus DE 10 2005 033 571 A1 ist eine Zahnbürste mit einem integrierten Zahnreinigungsmittel bekannt, bei dem ein Pumpmechanismus zum Fördern des Zahnreinigungsmittels aus dem Vorratsbehälter zum Bürstenkopf vorgesehen ist.

Aus DE 20 2005 006 568 U1 ist eine Zahnbürste mit enthaltener Zahnpasta bekannt, die über einen Dosierkolben, dessen Position am Griff einstellbar ist, gefördert wird. Aus US 2007/0041779 A1 ist eine Zahnbürste mit einer manuellen und elektrischen Pumpe zur Abgabe von Zahnpasta bekannt.

Aus US 7,677,827 B1 ist eine Zahnbürste mit einem Zahnpastavorrat bekannt. Die Zahnbürste hat einen Bürstenkopf mit einer Ausgabeöffnung, durch die Zahnpasta ausgegeben wird. Ein Schiebeverschluss dient dazu, den Fluss von Zahnpasta aus der Ausgabeöffnung zu stoppen. Der Schiebeverschluss läuft in einer Ausnehmung und besitzt oben aufliegend auf der Ausgabeöffnung einen Verschlusskopf.

Aus DE 39 25 860 A1 ist eine Zahnbürste mit einem Verschlussschieber bekannt. Der Verschluss ist ein mit umlaufenden Dichtrippen versehenes Rohr, das in einem Kanal geführt ist.

Bei der Verwendung der bekannten Zahnbürsten mit einem in den Griff integrierten Zahnpastavorrat stellt sich stets die Frage, wie und wie genau die Menge an Zahnpasta auf dem Bürstenkopf dosiert werden kann.

Der Erfindung liegt die Aufgabe zugrunde, eine Zahnbürste bereitzustellen, bei der mit einfachen Mitteln für den Benutzer die Möglichkeit geschaffen wird, die gewünschte Menge an Zahnpasta möglichst genau zu dosieren.

Die erfindungsgemäße Aufgabe wird durch eine Zahnbürste mit den Merkmalen aus Anspruch 1 gelöst. Bevorzugte Ausgestaltungen bilden den Gegenstand der Unteransprüche.

Die erfindungsgemäße Zahnbürste weist einen Griffabschnitt und einen Bürstenkopf auf. Der Bürstenkopf besitzt mindestens eine Austrittsöffnung, aus der Zahnpasta austreten kann. Zahnpasta wird nachfolgend als Oberbegriff verstanden und umfasst jegliches fließfähiges, liquides und/oder pastöses Zahnreinigungs- und/oder Zahnbehandlungsmittel. Die mindestens eine Austrittsöffnung ist über einen Kanal mit einem Zahnpastavorrat in dem Griffabschnitt verbunden. Erfindungsgemäß sind Zahnpastavorrat, Kanal und Austrittsöffnung derart aufeinander abgestimmt, dass über einen mit dem Mund des Benutzers ausgeführten Saugvorgang Zahnpasta aus dem Zahnpastavorrat über den Kanal zu der mindestens einen Austrittsöffnung befördert werden kann. Für den oralen Saugvorgang umschließt der Benutzer den Kopf der erfindungsgemäßen Zahnbürste und führt eine leichte Saugbewegung aus, durch die über den Kanal aus dem Zahnpastavorrat Zahnpasta angesaugt wird. Um mit einem üblichen Saugdruck eine ausreichende Menge von Zahnpasta entnehmen zu können, sind Zahnpastavorrat, Kanal und Austrittsöffnung entsprechend aufeinander abgestimmt. Hierzu sind beispielsweise Geometrie und Durchmesser von Kanal und Austrittsöffnung für einen leichten Durchgang der Zahnpasta ausgebildet. Auch die Oberflächenstruktur mit beispielsweise einer glatten oder einer rauen Oberfläche hat einen Einfluss auf den Saugdruck. Es kann auch durch eine Druckeinrichtung ein unterstützender Druck für das Fördern und Dosieren der Zahnpasta vorgesehen sein. Der Vorteil der erfindungsgemäßen Zahnbürste liegt neben der genauen Dosierung, die ein Benutzer mit dem Mund ausführen kann, auch darin, dass ein Benutzer den Vorgang des Zähneputzens mit einer Hand bequem ausführen kann und nicht umgreifen muss, beispielsweise um durch Drücken auf einen Vorratsbehälter oder Drehen eines Rades am Griffteil Zahnpasta aus dem Zahnpastavorrat auf den Bürstenkopf zu fördern. Die erfindungsgemäße Zahnbürste kann mit oder ohne elektrischen Antrieb ausgebildet sein.

Erfindungsgemäß ist eine Absperreinrichtung vorgesehen, die die Austrittsöffnung verschließt. Die Absperreinrichtung erfüllt dabei die Aufgabe weiter austretende Zahnpasta zu sperren und zugleich auch ein Aus- oder Antrocknen in der Austrittsöffnung zu verhindern. Die Absperreinrichtung kann hierbei als ein Ventil, ein Schieber oder ein Hahn ausgebildet sein. Die Absperreinrichtung besitzt ein Ventil, das beispielsweise im Wesentlichen in Fließrichtung der Zahnpasta bewegt, aus einer im Bürstenkopf geführten Schieberplatte bestehen kann. Die Schieberplatte kann mit einer Öffnung versehen sein. Durch Einstellen des Absperrorgans relativ zur Austrittsöffnung des Kanals ist es möglich, den Austrittskanal zu sperren oder freizugeben.

Erfindungsgemäß ist ferner ein Betätigungsorgan an dem in dem Bürstenkopf geführten Absperrorgan ausgebildet. Das Betätigungsorgan ist in einem Halsabschnitt zwischen Bürstenkopf und Griffabschnitt vorgesehen.

Betätigungsorgan und Absperrorgan sind einstückig ausgebildet. Über das Betätigungsorgan wird das Absperrorgan gestellt und der Austrittskanal für die Zahnpasta freigegeben oder verschlossen. Um ein Austrocknen des Zahnpastavorrats zu verhindern, ist ein wichtiger Aspekt, dass das Absperrorgan in dem Bürstenkopf zwei Abdichtflächen aufweist, zwischen denen das Absperrorgan beidseitig geführt ist. Das Absperrorgan befindet sich nach Art eines Sandwiches zwischen den beiden Abdichtflächen und bewegt sich relativ zu diesen. Durch zwei einander gegenüberliegende Abdichtflächen wird eine ausreichende Dichtigkeit für das Absperrorgan erreicht, die zuverlässig ein Austrocknen des Zahnpastavorrats verhindert.

In einer bevorzugten Ausgestaltung ist die erfindungsgemäße Zahnbürste mit einer Druckeinrichtung ausgestattet, über die ein den Saugvorgang unterstützender Druck nahezu allseitig auf die Zahnpasta ausgeübt wird. Die Druckeinrichtung weist zur Aufbringung des unterstützenden Drucks bevorzugt einen mit der Zahnpasta befüllten elastischen Ballon auf. Der elastische Ballon erzeugt einen Druck auf die Zahnpasta, sodass diese ganz oder teilweise durch den Kanal bis zur Auftrittsöffnung gefördert wird. An der Austrittsöffnung kann der Benutzer die geförderte Menge an Zahnpasta leicht dosieren. Der unterstützende Druck aus der Druckeinrichtung kann dabei so ausgelegt sein, dass die Zahnpasta ohne Saugvorgang nicht aus der Austrittsöffnung austritt, oder so, dass die Zahnpasta selbstständig austritt und durch den Saugvorgang die Austrittsmenge und Geschwindigkeit erhöht wird.

In einer bevorzugten Ausgestaltung ist für die Zahnbürste eine Zahnpastakartusche vorgesehen. Hierbei handelt es sich um ein Set, bestehend aus einer erfindungsgemäßen Zahnbürste und mindestens einer Zahnpastakartusche. Die Zahnpastakartusche ist ausgebildet, um in dem Zahnpastavorrat zur Verbindung mit dem zur Austrittsöffnung führenden Kanal angeordnet zu werden. Der Vorteil an der Verwendung einer Zahnpastakartusche liegt darin, dass unterschiedliche Kartuschen mit verschiedenen Geschmacksrichtungen und dergleichen im Griffabschnitt ausgetauscht werden können. Die Zahnpastakartuschen können nachfüllbar oder als Einmal-Kartusche ausgebildet sein, auch kann der elastische Ballon in der Kartusche angeordnet sein.

In einer Weiterbildung besitzt die Zahnpastakartusche einen Originalitätsverschluss, wobei in dem Zahnpastavorrat oder an dem Bürstenkopf Mittel zum Durchstoßen des Originalitätsverschlusses angeordnet sind. Der Originalitätsverschluss kann beispielsweise aus einer dünnen Aluminium- oder Kunststoffmembran bestehen, die mit Hilfe eines in dem Zahnpastavorrat oder an dem Bürstenkopf angeordneten Dorns, eines Hohldorns oder eines vergleichsbaren Mittels durchstoßen wird. Selbstverständlich sind auch hierbei die Abmessungen für den Anschluss der Kartusche derart gewählt, dass auch mit einem moderaten Saugdruck die Zahnpasta aus der Kartusche entnommen werden kann.

In einer bevorzugten Weiterbildung der Zahnbürste weist die Druckeinrichtung in dem Griffabschnitt mindestens einen elastischen Druckbereich auf. In dem Druckbereich wird das Volumen des Zahnpastavorrats durch Druck vermindert. Während ein elastischer Ballon als Druckeinrichtung konstruktiv durch sein Material und seinen geweiteten Zustand einen Druck auf die Zahnpasta ausübt, wird bei der Ausgestaltung mit Druckbereichen im Griffabschnitt die Möglichkeit geschaffen, gezielt, manuell einen unterstützenden Druck auszuüben, der die Entnahme und die Dosierung der Zahnpasta durch den Saugvorgang erleichtert.

In einer Weiterbildung dieser Ausgestaltung kann der Griffabschnitt vollständig aus einem elastischen Material, das ein Formgedächtnis aufweist, beispielsweise einem Thermoplasten bestehen. Hierdurch kann der Griffabschnitt beispielsweise tubenförmig ausgebildet sein, wobei durch sein Drücken auf die Tube Zahnpasta unterstützend gefördert wird und die Tube nach deren Druck in die ursprüngliche Gestalt zurückkehrt. Die so gebildete Außenhülle ist dabei stabil genug, um wie bei einem herkömmlichen Zahnbürstengriff zur Funktionsausübung der Zahnbürste genutzt werden zu können. Die Form und die Abmessungen können denen einer herkömmlichen Zahnbürste entsprechen.

Hinzu kommt, dass die Außenhülle elastisch genug ist, um an jeder Stelle eingedrückt zu werden, wodurch Zahnpasta in den Zahnbürstenkopf gefördert wird. Die Steifigkeit der Außenhülle ist durch Druckbereiche nicht so weit beeinträchtigt, dass auch bei fortschreitendem Leeren des Zahnpastavorrats das Griffteil seine Form verliert. Auch kann vorgesehen sein, im Inneren der elastischen Außenhülle eine Stützeinrichtung, beispielsweise in Form von Streben oder eines Gerippes vorzusehen. Aufgabe der Stützeinrichtung ist es auch bei weitgehend entleertem Zahnpastavorrat hier eine ausreichende Steifigkeit für die Handhabung beim Putzvorgang sicherzustellen.

In einer bevorzugten Ausgestaltung ist der Bürstenkopf mit einem rohrförmigen Austrittskanal versehen, der in den Zahnpastavorrat vorsteht. Bei einem Griffabschnitt, der ganz oder teilweise aus einem elastischen Material besteht, kann der rohrförmige Austrittskanal auch die Funktion einer Stützeinrichtung für den Griffabschnitt übernehmen. Über den rohrförmigen Austrittskanal wird Zahnpasta aus dem Zahnpastavorrat herausgefördert. In einer besonders bevorzugten Ausgestaltung ist der rohrförmige Austrittskanal über eine Kegel-Konusverbindung mit einer Austrittsöffnung des Zahnpastavorrats verbunden. Die Kegel-Konusverbindung besitzt den besonderen Vorteil, dass die Austrittsöffnung des Zahnpastavorrats dichtend verschlossen ist. Ein weiterer Vorteil liegt darin, dass bei der Kegel-Konusverbindung es nur auf einen Innendurchmesser der Austrittsöffnung aus dem Zahnpastavorrat ankommt und daher der rohrförmige Austrittskanal für unterschiedliche Durchmesser von Austrittsöffnungen eingesetzt werden kann.

In einer bevorzugten Ausgestaltung ist die Austrittsöffnung für die Zahnpasta im Bereich des Bürstenkopfes auf der den Bürsten abgewandten Seite angeordnet. Der Vorteil dieser Anordnung liegt darin, dass die Geometrie der Bürstenaufteilung durch die Austrittsöffnung nicht beeinflusst wird und die Austrittsöffnung in einer für den Saugdruck angepassten Größe hergestellt werden kann. Alternativ kann die Austrittsöffnung im Bürstenkopf auch zwischen den Bürsten angeordnet sein, wobei bevorzugt angrenzende Bürsten zu der Austrittsöffnung geneigt angeordnet sind. Indem die an die Austrittsöffnung grenzenden Bürsten geneigt angeordnet sind, wird die Austrittsöffnung für die Zahnpasta optisch verdeckt. Zudem erfolgt der Austritt der Zahnpasta durch die Bürsten hindurch, was eine gleichmäßige Verteilung der Zahnpasta gewährleistet.

In einer weiteren bevorzugten Ausgestaltung sind Griffabschnitt und Bürstenkopf über eine Steck-Drehverbindung mit einander verbindbar. Die Steck-Drehverbindung gestattet es, auf einfache Weise Griffabschnitt, beispielsweise mit Zahnpastavorrat, und Bürstenkopf auszutauschen. Die Steck-Drehverbindung besitzt für die Dreh- und/oder Steckbewegung einen Widerstand, der ausreichend groß für die Benutzung des Bürstenkopfes einerseits ist und andererseits ausreichend klein ist, um mit einer einfachen Handbewegung die Steck-Drehverbindung zu öffnen. Zusätzlich kann auch eine Verriegelung mit Hilfe eines Druckknopfes vorgesehen sein. Bevorzugt ist die Steck-Drehverbindung als ein Bajonett-Verschluss, ein Gewinde- oder eine Kegel-Konusverbindung ausgebildet. Im Hinblick auf Winkelstabilität und Dichtigkeit wird eine Kegel-Konusverbindung bevorzugt.

In einer bevorzugten Ausgestaltung besitzt die Zahnbürste in ihrem Griffabschnitt einen Halteabschnitt für einen zweiten Bürstenkopf. Der zweite Bürstenkopf kann beispielsweise innerhalb des Griffabschnitts angeordnet werden und dient dazu, bei Bedarf den ersten Bürstenkopf zu ersetzen. Bevorzugt sind erster und zweiter Bürstenkopf gleich ausgebildet.

In einer bevorzugten Ausgestaltung kann die erfindungsgemäße Zahnbürste auch mit einem elektrischen Antrieb für den Bürstenkopf versehen sein. Bei dem elektrischen Antrieb kann es sich beispielsweise um einen Elektromotor handeln, der beispielsweise im Griffabschnitt der Zahnbürste positioniert ist. Der elektrische Antrieb kann je nach Ausgestaltung die gesamte Zahnbürste in leichte, das Zähneputzen unterstützende Bewegungen versetzen oder den Bürstenkopf relativ zum Griffabschnitt bewegen.

Zahnpasta verhält sich in der Regel wie eine nicht-newtonsche Flüssigkeit, deren Fließeigenschaften durch Vibrationen und leichte Erschütterungen verbessert werden können. In einer bevorzugten Ausgestaltung kann daher in dem Griffabschnitt der Zahnbürste ein Vibrationselement vorgesehen sein, das mit dem Zahnpastavorrat zusammenwirkt und durch in die Zahnpasta eingetragene Vibrationen deren Fließeigenschaft verändert.

Zur elektrischen Versorgung des Antriebs und/oder des Vibrationselements kann ein Solarelement vorgesehen sein, das ganz oder teilweise die elektrische Versorgung übernimmt. Durch einen kleinbauenden Energiespeicher, wie beispielsweise einen Kondensator oder einen Akkumulator, kann die Energie der Solarzelle gespeichert werden und für den elektrischen Verbrauch zur Verfügung gestellt werden. Bevorzugt ist das Solarelement so ausgebildet, dass dieses auch bei Kunstlicht ausreichend elektrische Leistung erzeugt.

Eine bevorzugte Ausgestaltung wird nachfolgend anhand eines Ausführungsbeispiels näher erläutert. Es zeigen:
- Fig. 1: einen Querschnitt durch eine Zahnbürste, welche nicht gemäß der Erfindung ist, jedoch Merkmale der erfindungsgemäßen Zahnbürste aufweist,

- Fig. 2: die Zahnbürste aus Fig. 1 in einer Ansicht von der Seite mit verschwenkbaren Deckel,
- Fig. 3: eine Ansicht der Zahnbürste aus Fig. 2 mit geöffnetem Deckel,
- Fig. 4: eine schematische Ansicht einer Kartusche für Zahnpasta,
- Fig. 5a,b: eine alternative Ausgestaltung einer erfindungsgemäßen Zahnbürste mit Öffnungen im Handgriff und einem Drehverschluss in einer Detailansicht und
- Fig. 6: eine weitere Ausgestaltung der erfindungsgemäßen Zahnbürste mit einem zweiteiligen Aufbau aus Griffabschnitt und Bürstenkopf sowie einem Ventil im Bürstenkopf,
- Fig. 7: zeigt einen Aufbau mit Bürstenkopf und einem zweiteiligen Griffabschnitt sowie einem Ventil in Bürstenkopf,
- Fig. 8: zeigt eine weitere Variante mit Bürstenkopf und einem zeitlichen Absperrschieber im Bürstenkopf, wobei diese Variante nicht gemäß der Erfindung ist, und
- Fig. 9: zeigt eine weitere Variante mit einem tubenförmigen Griffabschnitt.

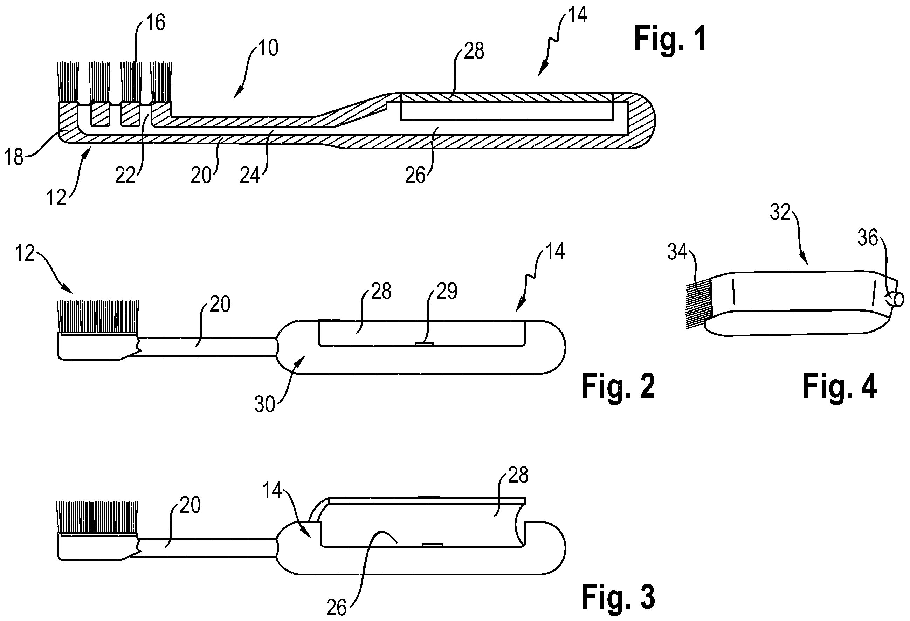

Fig. 1 zeigt eine Zahnbürste 10, welche nicht gemäß der Erfindung ist, in einer mittigen Schnittansicht entlang der Längsrichtung. Die Zahnbürste 10 besitzt einen Bürstenkopf 12 sowie einen Griffabschnitt 14. Der Bürstenkopf 12 besitzt einen mit Borsten 16 ausgestatteten Borstenkopf 18, der über einen Stiel 20 in den Griffabschnitt 14 übergeht. Im Borstenkopf 18 sind zwischen Borsten 16 Austrittsöffnungen 22 vorgesehen. Die Austrittsöffnungen 22 sind mit einem Kanal 24 verbunden, der sich durch den Stiel 20 in einen Zahnpastavorrat 26 erstreckt. In dem dargestellten Ausführungsbeispiel erstreckt sich die Austrittsöffnung 22 unter einem annähernd rechten Winkel gegenüber dem Kanal 24. Durchmesser und Winkellage der Austrittsöffnung sind dabei derart gewählt, dass mit Hilfe eine Saugvorgangs Zahnpasta aus dem Zahnpastavorrat 26 entnommen werden kann. Der Zahnpastavorrat 26 ist über eine mit einem Schnappverschluss ausgestattete Klappe 28 verschließbar.

Fig. 2 zeigt die Zahnbürste aus Fig. 1 in einer Ansicht von der Seite bei geschlossener Klappe 28. Die Klappe 28 besitzt an einem Ende beispielsweise einen Vorsprung 29, über den die Klappe zum Öffnen oder Schließen ergriffen werden kann. Zudem kann die Klappe 28 beispielsweise mit einem Rast- oder Schnappverschluss ausgebildet sein, so dass die Klappe 28 in ihrer den Zahnpastavorrat verschließenden Position gesichert werden kann. Fig. 2 zeigt ebenfalls, dass der Griffabschnitt 14 einen größeren Durchmesser als beispielsweise der Stiel 20 der Zahnbürste besitzt. Hierdurch kann beispielsweise ein elektrischer Antrieb 30 zur Betätigung des Bürstenkopfes 12 vorgesehen sein.

Fig. 3 zeigt die Zahnbürste aus Fig. 2 bei geöffneter Klappe 28, wodurch ein Blick in den Zahnpastavorrat 26 freigegeben ist.

Der Aufbau der Zahnbürste kann je nach eingesetzter Technologie sehr unterschiedlich sein. Während Fig. 1 beispielsweise eine einstückig gebildete Zahnbürste zeigt, die einen Zahnpastavorrat im Griffabschnitt besitzt, zeigen Fign. 2 und 3 eine Ausgestaltung der erfindungsgemäßen Zahnbürste, bei der ein zweiteiliger Aufbau möglich ist. Bei dem zweiteiligen Aufbau kann der Bürstenkopf ausgetauscht werden. Hierbei gehört zum Bürstenkopf in der Regel auch ein Stielabschnitt. Auch kann die Zahnbürste hinsichtlich ihrer Verwendung und ihres Antriebes sehr unterschiedlich aufgebaut sein.

Fig. 4 zeigt eine Kartusche 32, die aus einem elastischen Folienmaterial herstellt ist. Das Folienmaterial ist entlang einer Naht 34 verschweißt und verschlossen. Auf der gegenüberliegenden Seite ist ein Anschluss 36 vorgesehen, der als Stutzen aus der Kartusche vorsteht. Der Anschluss 36 wird in Kontakt mit der Anschlussmitte im Griffteil der Zahnbürste gebracht, um Zahnpasta fördern zu können. Bei der dargestellten Kartusche ist das Folienmaterial so flexibel ausgebildet, dass bei der Entnahme von Zahnpasta aus der Kartusche der Folienbeutel sich zusammenlegt und kein Unterdruck aufgebaut wird. Weist eine Kartusche für die Zahnpasta einen starren Körper auf, der sein Volumen mit der Entnahme der Zahnpasta nicht reduzieren kann, so ist dieser mit einer Druckausgleicheinrichtung zu versehen.

In einer bevorzugten Ausgestaltung kann beispielsweise durch Zuklappen des Deckels 28 auf die Kartusche eine Vorwärtsbewegung erzeugt werden, die so viel Druck entfaltet, dass der Anschluss 36 durchstoßen wird. Hierzu kann beispielsweise im Inneren der Zahnbürste ein Dornansatz vorgesehen sein, der eine Verbindung zu dem Kanal herstellt. Im Bürstenkopf selbst sind zwischen den einzelnen Bürstenöffnungen eine oder mehrere Austrittöffnungen vorgesehen. Die Konsistenz der in der Kartusche enthaltenen Zahnpasta ist leicht fest, aber pastös, fließfähig, vergleichbar mit einem Yoghurtprodukt und wird durch eine Saugbewegung zum Bürstenkopf gefördert. Die Menge der angesaugten Zahnpasta wird durch die Dauer des Saugvorgangs bestimmt, besonders vorteilhaft erweist sich hier, dass während des Zahnputzvorganges selbst noch nachdosiert werden kann.

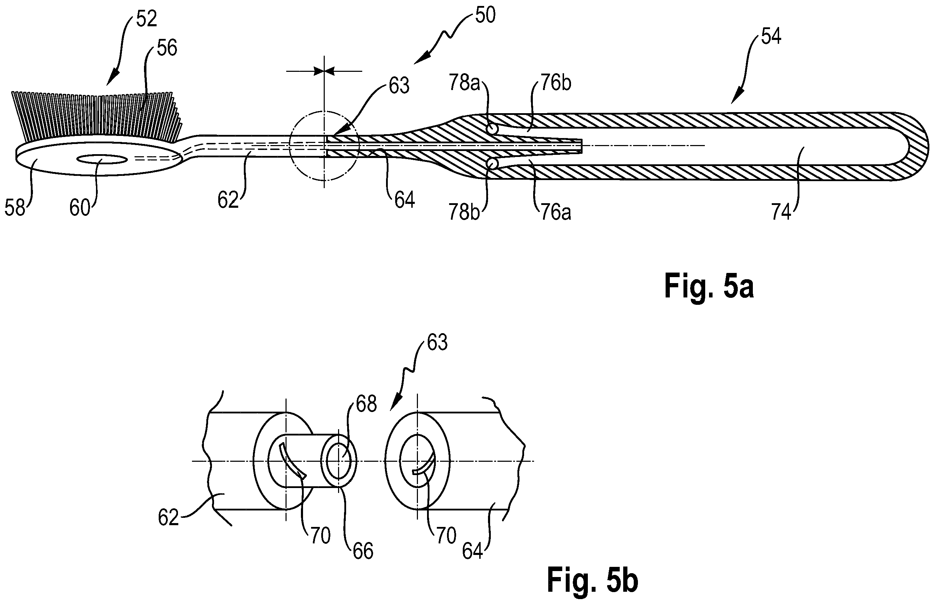

Fig. 5a zeigt eine Zahnbürste 50 mit einem Bürstenkopf 52 und einem Griffabschnitt 54. Der Bürstenkopf 52 besitzt Borsten 56 an einem Borstenkopf 58. Der Borstenkopf 58 besitzt auf der von den Borsten 56 fortweisenden Seite eine Saugöffnung 60. Der Borstenkopf 58 geht in einen Borstenhals 62 über, der über einen Drehverschluss 63 mit einem vorstehenden Abschnitt 64 des Griffabschnitts 54 verbunden ist.

Die Detailansicht in Fig. 5b zeigt einen vorstehenden, kreiszylindrischen Vorsprung 66, der in seinem Inneren einen Zahnpastakanal 68 führt. Der kreiszylindrische Vorsprung 66 trägt auf seiner Außenseite einen Gewindeabschnitt 70, mit dem über eine Drehverbindung der Bürstenkopf 52 an dem Griffabschnitt 54 befestigt werden kann. Der Verbindungsabschnitt 64 des Griffabschnitts 54 besitzt eine kreisförmige Aufnahme, die in ihrem Durchmesser an den Außendurchmesser des kreiszylindrischen Vorsprungs 66 angepasst ist. Im Inneren der Öffnung befindet sich ein korrespondierender Gewindeabschnitt 72, der bei einem Verschluss mit dem Gewindeabschnitt 70 zusammenwirkt. Über einen Vorsprung kann eine Schnapp- oder Rastposition erzielt werden. In der verbundenen Position ist der Kanal 68 durchgehend mit dem Zahnpastavorrat 74 im Inneren des Griffabschnitts 54 verbunden.

Der Griffabschnitt 54 besitzt einen Zahnpastavorrat 74, der über zwei Lüftungskanäle 76a, 76b mit der Umgebung in Verbindung steht. Die Lüftungskanäle 76a, 76b besitzen endseitig Öffnungen 78a, 78b, die auf der zum Bürstenkopf 52 weisenden Seite des Griffabschnitts 54 angeordnet sind. Der Zahnpastavorrat 74 ist in der dargestellten Ausführungsform direkt mit Zahnpasta gefüllt, ohne dass eine Zahnpastakartusche vorgesehen ist. Der Griffabschnitt wird insgesamt ausgewechselt, wenn die Zahnpasta, beispielsweise aus Gründen des Geschmacks oder des Verbrauchs, ausgetauscht werden soll.

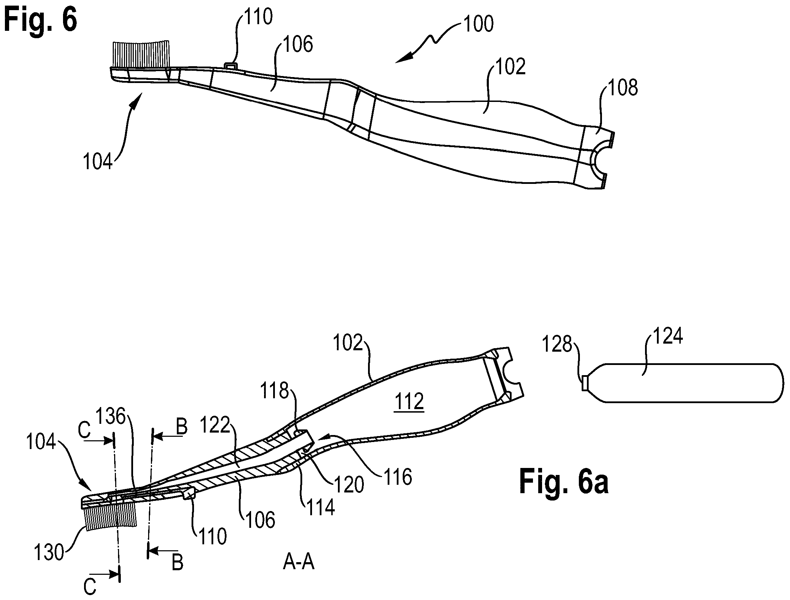

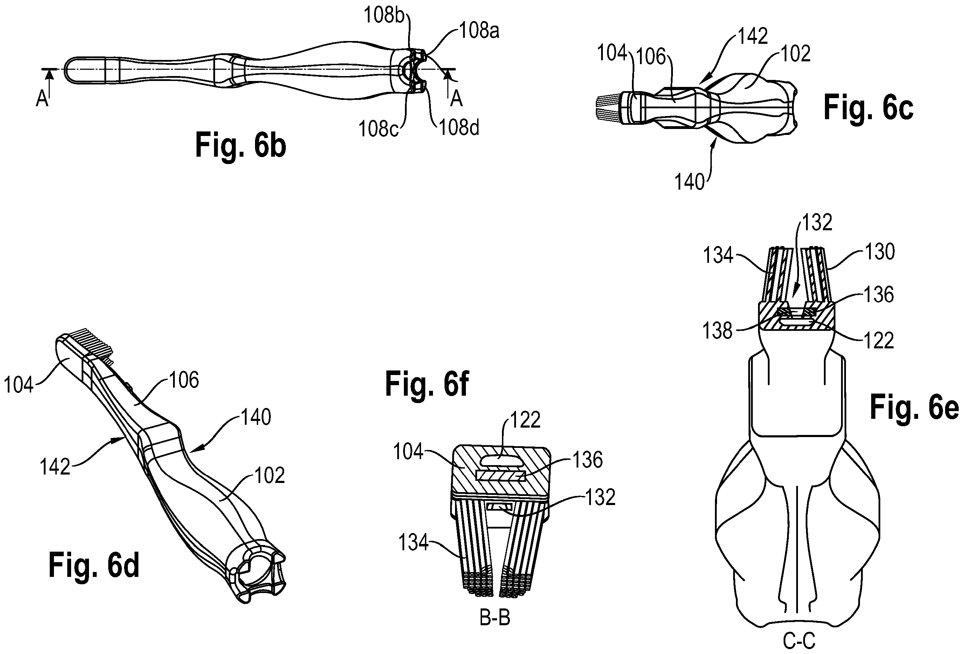

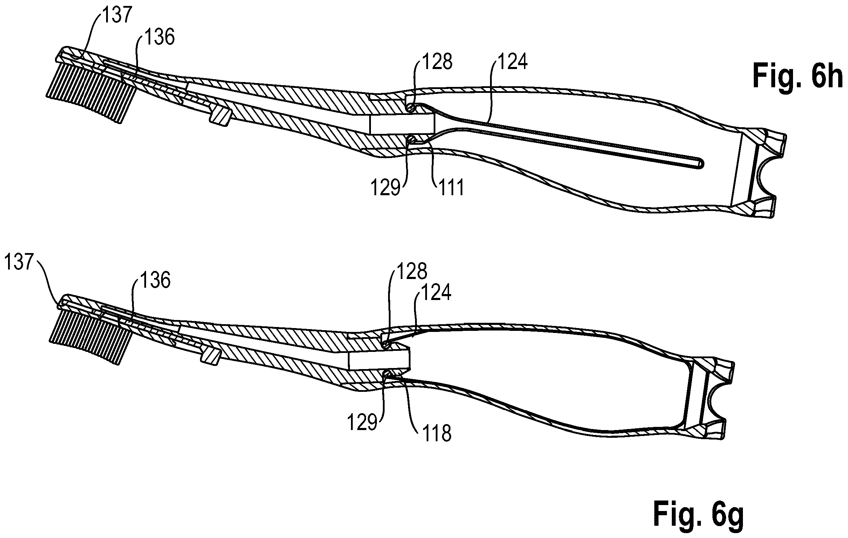

Figur 6 zeigt in einer Ansicht von der Seite eine bevorzugte Ausgestaltung der erfindungsgemäßen Zahnbürste. Die Zahnbürste besitzt ein Griffteil 102 und einen Bürstenkopf 104. Der Bürstenkopf 104 geht in einen Halsabschnitt 106 über, der mit dem Griffabschnitt 102 lösbar verbunden ist. Der Griffabschnitt 102 besitzt vier Fußsockel 108, auf die die Zahnbürste 100 gestellt werden kann. In der Seitenansicht aus Fig. 6 ist ferner ein Betätigungsabschnitt 110 erkennbar, über den ein Absperrventil am Bürstenkopf 104 verschließbar ist.

Figur 6b zeigt eine rückwärtige Ansicht, auf der die Füße 108a-d zu erkennen sind. Figur 6a zeigt einen Schnitt entlang der Linie A-A aus Figur 6b. In dem Schnitt zu erkennen ist der Griffabschnitt 102, der einen im Wesentlichen zylindrischen Zahnpastavorrat 112 umschließt. Das Griffteil 102 ist auf einen Verbindungsabschnitt 114 des Halsabschnitts 106 aufgesetzt. Die Verbindung zwischen Verbindungsabschnitt 114 und Griffabschnitt 102 erfolgt in dem dargestellten Ausführungsbeispiel reibschlüssig. Grundsätzlich kann hier aber auch ein Gewinde, ein Bajonettverschluss oder eine Schnappverbindung vorgesehen sein.

Der Halsabschnitt 106 besitzt auf seinem in den Griffabschnitt 102 vorstehenden Ende einen pilzförmigen Befestigungsabschnitt 116. Der Befestigungsabschnitt 116 besitzt einen Kopf 118, der einen größeren Durchmesser als ein Halsabschnitt 120 besitzt. Ein Austrittskanal 122 erstreckt sich durch den Befestigungsabschnitt 116. Der Befestigungsabschnitt 116 dient zur Befestigung eines elastischen Ballons 124 mit seiner Mündungsöffnung 128. Der elastische Beutel 124 ist mit Zahnpasta gefüllt und durch diese elastisch geweitet. Aufgrund seiner Ausdehnung und der nahezu allseitig auf die Zahnpasta aufgebrachten Kraft, herrscht ein erhöhter Druck für die Zahnpasta an der Ballonöffnung.

Der Ballon 124 wird mit seiner Öffnung 128 auf den Befestigungsabschnitt 116 aufgesetzt, wobei die Ballonöffnung 128 über den Kopf 118 gedehnt und in dem Verbindungshals 120 gehalten wird.

Der Verbindungskanal 122 mündet in den Bürstenkopf 104. Auf der den Borsten 130 zugewandten Seite besitzt der Austrittskanal 122 eine Austrittsöffnung 132. Der Schnitt entlang der Linie C-C aus Figur 6a ist in Figur 6e dargestellt. In dem Schnitt ist zu erkennen, wie der Austrittskanal 122 in die konisch sich erweiternde Austrittsöffnung 132 übergeht. Die Austrittsöffnung 132 ist durch die Borsten verdeckt, indem diese nach innen, zum Zentrum des Bürstenkopf hin, geneigt sind.

Der Betätigungsvorsprung 110 betätigt eine Schieberplatte 136. Die Schieberplatte 136 ist beidseitig, das bedeutet auf ihren beiden Flachseiten in dem Bürstenkopf 104 abdichtend nach Art eines Sandwiches geführt. Die beidseitige Führung stellt eine ausreichende Dichtigkeit der vorgeschobenen Schieberplatte 136 sicher, wodurch ein Austrocknen der Zahnpasta im Griffteil 102 bzw. im Ballon 124 verhindert wird. In seiner vorgeschobenen Position wird die Schieberplatte 136 in eine geschlossene Gehäusetasche 137 vorgeschoben. Die geschlossene Gehäusetasche 137 nimmt die Schieberplatte in ihrer Schließstellung auf.

Wie in Figur 6e zu erkennen, fluchtet die Öffnung 138 in der Schieberplatte 136 mit der konisch sich erweiternden Austrittsöffnung 132. Der in Figur 6f dargestellte Schnitt entlang der Linie B-B aus Figur 6a zeigt die beidseitige Führung der Schieberplatte 136 im Bürstenkopf 104.

Figuren 6c und 6d zeigen den besonderen ergonomischen Aufbau an der Zahnbürste. Der Handgriff 102 besitzt eine bauchige Form, mit der das Greifen erleichtert ist. Über eine Taille 140 und eine Ausbuchtung 142 am Hals der Zahnbürste lässt sich diese auch besonders leicht führen.

Figur 6g zeigt den Ballon 124 in seiner auf den Kopf 118 aufgesetzten Position. Die Ballonöffnung 128 besitzt einen umlaufenden Rand 129, in dem eine Materialverdickung vorliegt. Der umlaufende Rand ist schnürend an dem Verbindungshals 120 angelegt. Durch die Verbreiterung des Kopfs 118 gegenüber dem Verbindungshals 120 wird eine lösbare, aber sehr feste Verbindung zwischen dem Kopf 118 und dem Ballon 124 geschaffen. Fig. 6h zeigt die Konfiguration aus Fig. 6g mit einem nicht gefüllten Ballon 124. Durch die konusförmige Geometrie des Kopfes 118 wird der Ballon 124 auch im nicht gefüllten Zustand gehalten.

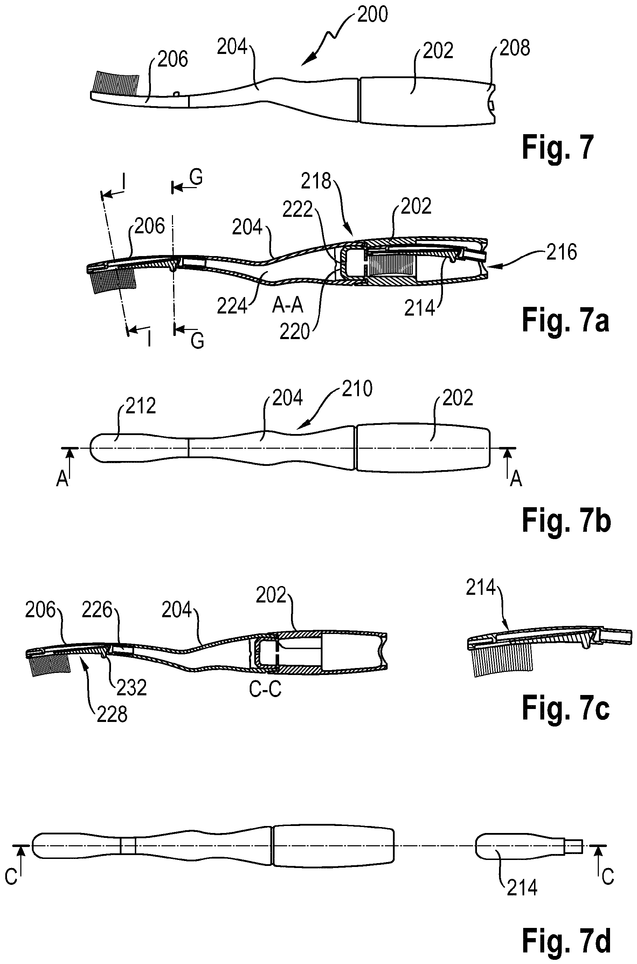

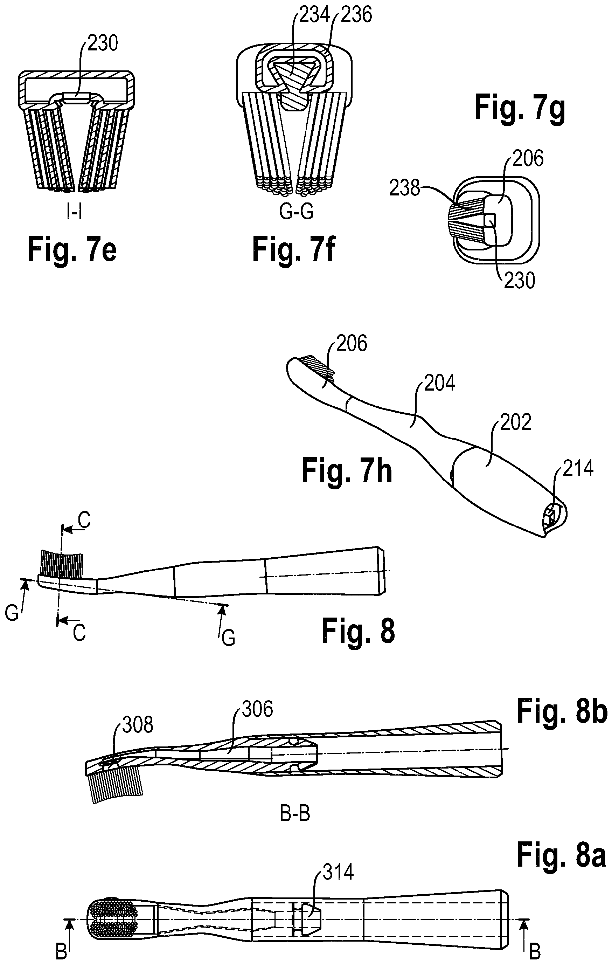

Eine weitere Ausgestaltung ist in den Figuren 7a-h dargestellt. Die in Figur 7 dargestellte Zahnbürste 200 besitzt einen in der Form sehr ähnlichen Aufbau wie die Zahnbürste 100. Die Zahnbürste 200 besteht aus einem zweiteiligen Griffteil 202, 204, die lösbar miteinander verbunden sind. Auf das zweite Griffteil 204 ist der Bürstenkopf 206 aufgesetzt. Figur 7b zeigt den Aufbau der Zahnbürste 200, wobei ein zweiteiliger Aufbau des Griffteils mit den Teilen 202 und 204 deutlicher zu erkennen ist. Das erste Griffteil 202 erstreckt sich von einem Fußende, das mit drei Aufstellfüßen 208 versehen ist, ungefähr über ein Drittel der Gesamtlänge. Hieran schließt sich der zweite Teil des Griffteils 204 an, der eine Taille 210 zur besseren Führung der Zahnbürste besitzt.

Figur 7a zeigt einen Schnitt entlang der Linie A-A aus Figur 7b. In der Schnittdarstellung zu erkennen ist, dass das erste Teil des Griffabschnitts 202 zum Fuß der Zahnbürste hin offen ist und einen zweiten Bürstenkopf 214 aufnehmen kann. Über das am Fuß offene Ende 216 kann der zweiten Bürstenkopf 214 aufgenommen werden. Der zweite Abschnitt 204 des Griffabschnitts ist über einen reibschlüssigen Verbindungsabschnitt 218 mit dem ersten Griffabschnitt 202 verbunden.

Für den reibschlüssigen Verbindungsabschnitt 218 ist ein zylinderförmiger Vorsprung 220 an dem ersten Teil des Griffabschnitts 202 ausgebildet. Der zylinderförmige Vorsprung 220 ist in eine Verbindungsöffnung des zweiten Griffabschnitts 204 eingesetzt, um so die reibschlüssige Verbindung 218 zu erzeugen. Der zylinderförmige Abschnitt 220 besitzt zentral eine Bohrung 222, über die ein Druckausgleich mit dem Zahnpastavorrat 224 erfolgen kann.

An den Bürstenkopf 206 ist mit einem vorspringenden Verbindungsabschnitt 226 auf den zweiten Griffabschnitt 204 gesteckt (vgl. Figur 7c). Der Verbindungsabschnitt 226 bildet hierbei mit dem Austrittskanal für die in dem Zahnpastavorrat 224 bevorratete Zahnpasta. Der Austrittskanal setzt sich in dem Zahnpastakopf 206 fort, wobei ein Schiebeventil 228 vorgesehen ist, mit dem eine Austrittsöffnung 230 verschlossen werden kann. Das Schiebeventil 228 besitzt ein vorstehendes Betätigungsorgan 232. Über das Betätigungsorgan 232 wird der Ventilkörper 234 vorgeschoben, um die Austrittsöffnung 230 zu verschließen. Figur 7f zeigt einen Schnitt entlang der Linie G-G aus Figur 7a. Deutlich zu erkennen ist, dass der Ventilkörper 234 sich auf seiner von den Borsten 236 fortweisenden Seite hin verbreitert. Hierdurch entsteht eine Schwalbenschwanzverbindung. Der Verriegelungskörper 234 ist von einer den Austrittskanal umgebenen Wandung 236 gehalten. Durch ein Vorschieben des Betätigungsorgans wird die Austrittsöffnung 230 verschlossen.

Figur 7g zeigt eine Draufsicht auf den Bürstenkopf 206, mit der Austrittsöffnung 230, wobei zu erkennen ist, dass die angrenzenden Borsten 238 zur Austrittsöffnung 230 hin geneigt sind. Figur 7h zeigt in einer rückseitigen Ansicht die Zahnbürste mit eingesetztem zweitem Bürstenkopf 214.

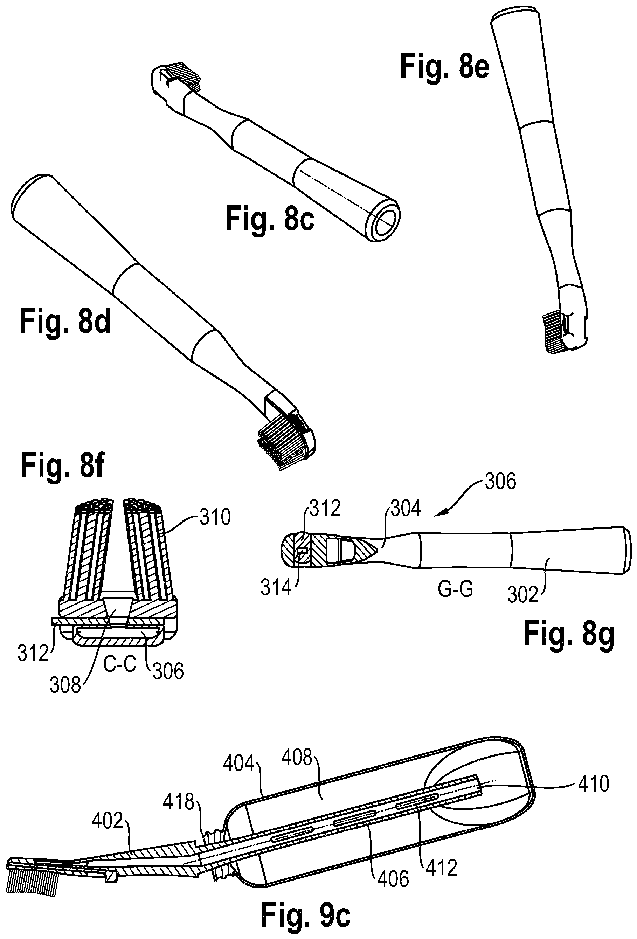

Figur 8 zeigt eine weitere Ausgestaltung einer Zahnbürste 300, welche nicht gemäß der Erfindung ist, mit einem Griffteil 302 und einem Bürstenkopf 304. Der wesentliche Unterschied zu der Ausgestaltung aus Figur 6 liegt in der Absperreinrichtung für den Austrittskanal 306. Der Kanal 306 mündet in eine Austrittsöffnung 308, die von geneigten Borsten 310 umgeben ist. Verschlossen wird die Austrittsöffnung 308 im Bereich des Bürstenkopfs 304 über einen seitlich betätigten Schieber 312. Der Schieber 312 besitzt eine Durchbrechung 314, die in einer Stellung (vgl. Fig. 8f) mit der konischen Austrittsöffnung 308 fluchtet. Wie in der Schnittdarstellung aus Fig. 8g entlang der Linie G-G in Figur 8 kann der Schieber 312 seitlich quer zur Längsrichtung der Zahnbürste verschoben werden. Hierdurch kann die Austrittsöffnung 308 des Austrittskanals 306 verschlossen werden.

Das in Fig. 8 gezeigte Modell ist wieder vorgesehen und bestimmt zur Verwendung eines elastischen Ballons 124, der auf einen Befestigungsabschnitt 314 aufgezogen wird. Der elastische Ballon 124 besteht aus einem Elastomermaterial, das durch seine Füllung mit Zahnpasta ausgedehnt ist und mit einem vorbestimmten Druck die Zahnpasta in den Kanal 306 drückt. Durch die Verwendung eines Ballons mit Zahnpastavorrat kann das Griffteil 302 an seinem Fußende offen gestaltet werden.

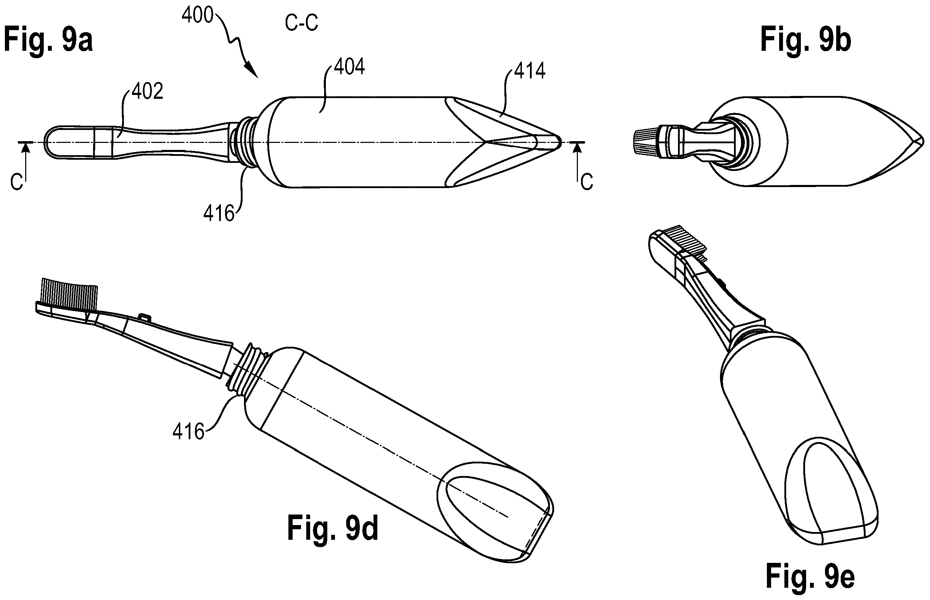

Fig. 9 zeigt eine Ausgestaltung der erfindungsgemäßen Zahnbürste 400, die einen Bürstenkopf 402 und einen Griffabschnitt 404 besitzt. Fig. 9c zeigt einen Schnitt entlang der Linie C-C aus Fig. 9a. In der Schnittdarstellung ist zu erkennen, dass der Bürstenkopf 402 einen rohrförmigen Austrittskanal 406 besitzt, der in den Zahnpastavorrat 408 in der Tube 404 vorsteht. Der Bürstenkopf 402 ist über eine Kegel-Konusverbindung mit der Tube 404 verbunden. Mit dem so gebildeten Kegelsitz wird eine gute Dichtigkeit und Festigkeit erzielt. Der Kanal 406 besitzt an seinem Ende eine Eintrittsöffnung 410. Zusätzlich sind in Längsrichtung sich erstreckende Öffnungen 412 vorgesehen, über die Zahnpasta seitlich in den Austrittskanal eintreten kann. Der Griffabschnitt 404 wird von einer Tube mit einem keilförmigen Ende 414 gebildet. An dem gegenüberliegenden Ende ist ein Schraubgewinde 416 vorgesehen, auf das ein Deckel (nicht dargestellt) mit Innengewinde aufgeschraubt werden kann, wenn die Tube nicht als Zahnbürste benutzt wird. Der Bürstenkopf 402 ist mit der Kegel-Konusverbindung auf die Öffnung 418 aufgesetzt, wodurch keine Anpassung an das Gewinde 416 erforderlich ist, sondern lediglich auf dem Durchmesser des Austrittskanals.

Der Bürstenkopf 402 ist an seinem aus dem Griffteil 404 vorstehenden Abschnitt genauso aufgebaut, wie der Bürstenkopf aus Ausführungsbeispiel nach Fig. 6. Selbstverständlich könnte auch die Ausgestaltung aus Fig. 7 oder den Figuren 8 mit dem tubenartigen Griffteil 404 kombiniert werden.

### Bezugszeichenliste

- 10: Zahnbürste
- 12: Bürstenkopf
- 14: Griffabschnitt
- 16: Borsten
- 18: Borstenkopf
- 20: Stiel
- 22: Austrittsöffnung
- 24: Kanal
- 26: Zahnpastavorrat
- 28: Klappe
- 29: Vorsprung
- 30: elektrischer Antrieb
- 32: Kartusche
- 34: Naht
- 36: Anschluss
- 50: Zahnbürste
- 52: Bürstenkopf
- 54: Griffabschnitt
- 56: Borsten
- 58: Borstenkopf
- 60: Saugöffnung
- 62: Borstenhals
- 63: Drehverschluss
- 64: Abschnitt des Griffabschnitts
- 66: Vorsprung
- 68: Zahnpastakanal
- 70: Gewindeabschnitt
- 72: Gewindeabschnitt
- 74: Zahnpastavorrat
- 76a,b: Lüftungskanal
- 78a,b: Öffnung
- 102: Griffteil
- 104: Bürstenkopf
- 106: Halsabschnitt
- 108: Fußsockel
- 110: Betätigungsabschnitt
- 112: Zahnpastavorrat
- 114: Verbindungsabschnitt
- 116: Befestigungsabschnitt
- 118: Kopf
- 120: Halsabschnitt
- 122: Austrittskanal
- 124: Ballon
- 128: Verbindungsöffnung
- 130: Borsten
- 132: Austrittsöffnung
- 136: Schieberplatte
- 140: Taille
- 142: Ausbuchtung
- 200: Zahnbürste
- 202: Griffteil
- 204: Griffteil
- 206: Bürstenkopf
- 208: Aufstellfüße
- 210: Taille
- 214: Bürstenkopf
- 216: offenes Ende
- 218: Verbindungsabschnitt
- 220: Vorsprung
- 222: Bohrung
- 224: Zahnpastavorrat
- 226: Verbindungsabschnitt
- 228: Schiebeventil
- 230: Austrittsöffnung
- 232: Betätigungsorgan
- 234: Ventilkörper
- 300: Zahnbürste
- 302: Griffteil
- 304: Bürstenkopf
- 306: Austrittskanal
- 308: Austrittsöffnung
- 310: Borsten
- 312: Schieber
- 314: Durchbrechung
- 400: Zahnbürste
- 402: Bürstenkopf
- 404: Griffabschnitt
- 406: Austrittskanal
- 408: Zahnpastavorrat
- 410: Eintrittsöffnung
- 412: Öffnungen
- 414: keilförmiges Ende
- 416: Schraubgewinde
- 418: Öffnungen

## Patentansprüche

1. Zahnbürste (10) mit einem Griffabschnitt (14) und einem Bürstenkopf (12), der mindestens eine über einen Kanal (24) mit einem Zahnpastavorrat (26) in dem Griffabschnitt (14) verbundene Austrittsöffnung (22) aufweist, wobei eine Absperreinrichtung vorgesehen ist, die die Austrittsöffnung verschließt, die Absperreinrichtung weist ein gegenüber dem Bürstenkopf bewegliches und in dem Bürstenkopf geführtes Absperrorgan auf, an dem ein Betätigungsorgan ausgebildet ist und das Betätigungsorgan in einem Halsabschnitt zwischen Bürstenkopf und Griffabschnitt vorgesehen ist, wobei Betätigungsorgan und Absperrorgan einstückig ausgebildet sind
**dadurch gekennzeichnet, dass**
• das Absperrorgan in dem Bürstenkopf zwei Abdichtflächen aufweist, zwischen denen das Absperrorgan beidseitig geführt ist und
• Zahnpastavorrat (26), Kanal (24) und Austrittsöffnung (22) in ihrer Geometrie und im Durchmesser von Kanal (24) und Austrittsöffnung (22) derart aufeinander abgestimmt sind, dass über einen mit dem Mund eines Benutzers ausgeführten Saugvorgang Zahnpasta aus dem Zahnpastavorrat (26) über den Kanal (24) zu der mindestens einen Austrittsöffnung (22) gefördert werden kann, wobei Geometrie und Durchmesser von Kanal und Austrittsöffnung für einen leichten Durchgang der Zahnpasta ausgebildet und ein bei dem Saugvorgang aufgebrachter Saugdruck durch die Rauigkeit der Oberfläche bestimmt ist.

2. Zahnbürste nach Anspruch 1, **dadurch gekennzeichnet, dass** der Zahnpastavorrat (26) eine Druckeinrichtung aufweist, über die ein den Saugvorgang unterstützender Druck auf die Zahnpasta ausgeübt wird.

3. Zahnbürste nach Anspruch 2, **dadurch gekennzeichnet, dass** die Druckeinrichtung einen mit der Zahnpasta befüllten elastischen Ballon aufweist, der mit seinem offenen Ende in Kontakt mit dem Kanal steht.

4. Zahnbürste nach Anspruch 2 oder 3, **dadurch gekennzeichnet, dass** die Druckeinrichtung in dem Griffabschnitt mindestens einen Druckbereich aufweist, in dem das Volumen des Zahnpastavorrats durch Druck auf den Druckbereich vermindert wird.

5. Zahnbürste nach Anspruch 4, **dadurch gekennzeichnet, dass** der Griffabschnitt vollständig aus einem elastischen Material besteht, das ein Formgedächtnis aufweist.

6. Zahnbürste nach einem der Ansprüche 1 bis 5, **dadurch gekennzeichnet, dass** der Bürstenkopf (402) einen rohrförmigen Austrittskanal (406) besitzt, der in den Zahnpastavorrat vorsteht.

7. Zahnbürste nach Anspruch 6, **dadurch gekennzeichnet, dass** der rohrförmige Austrittskanal (406) über eine Kegel-Konusverbindung mit einer Austrittsöffnung des Zahnpastavorrats verbunden ist.

8. Zahnbürste nach einem der Ansprüche 1 bis 7, **dadurch gekennzeichnet, dass** eine Zahnpastakartusche (32) vorgesehen ist, die austauschbar mit ihrem Zahnpastainhalt zur Verbindung mit dem Kanal (24) in dem Griffabschnitt angeordnet ist.

9. Zahnbürste nach Anspruch 8, **dadurch gekennzeichnet, dass** die Zahnpastakartusche (32) einen durchstoßbaren Originalitätsverschluss aufweist.

10. Zahnbürste nach einem der Ansprüche 1 bis 9, **dadurch gekennzeichnet, dass** die Austrittsöffnung auf der den Bürsten abgewandten Seite an dem Bürstenkopf vorgesehen ist.

11. Zahnbürste nach einem der Ansprüche 1 bis 10, **dadurch gekennzeichnet, dass** die Austrittsöffnung im Bürstenkopf zwischen den Bürsten angeordnet ist, wobei einzelne Bürsten zu der Austrittsöffnung geneigt angeordnet sind.

12. Zahnbürste nach einem der Ansprüche 1 bis 11, **dadurch gekennzeichnet, dass** Griffabschnitt und Bürstenkopf über eine Steck-Drehverbindung, insbesondere eine Kegel-Konusverbindung, miteinander verbindbar sind.

13. Zahnbürste nach einem der Ansprüche 1 bis 12, **dadurch gekennzeichnet, dass** der Griffabschnitt einen Halteabschnitt für einen zweiten Bürstenkopf aufweist.

14. Zahnbürste nach Anspruch 1, **dadurch gekennzeichnet, dass** das Absperrorgan drehend und/oder schiebend gegenüber dem Bürstenkopf beweglich geführt ist, wobei das Absperrorgan eine plane, zylindrische, kegelstumpfförmige, kugelcharlottenförmige oder eine rotationsflächenförmige Kontaktfläche aufweist.

15. Zahnbürste nach einem der Ansprüche 1 bis 14, **dadurch gekennzeichnet, dass** ein elektrischer Antrieb für den Bürstenkopf vorgesehen ist.

16. Zahnbürste nach einem der Ansprüche 1 bis 15, **dadurch gekennzeichnet, dass** ein elektrisches Vibrationselement vorgesehen ist, das mit dem Zahnpastavorrat zusammenwirkt.

17. Zahnbürste nach Anspruch 15 oder 16, **dadurch gekennzeichnet, dass** ein Solarelement vorgesehen ist, das vollständig oder teilweise eine elektrische Versorgung übernimmt.

## Claims

1. A toothbrush (100; 200; 400) having a handle section (102; 202, 204; 404) and a brush head (104; 206; 402) which comprises at least one outlet opening (132; 230) connected to a toothpaste supply (112; 224; 408) in the handle section via a channel (122; 406), wherein a shut-off apparatus which closes the outlet opening is provided, the shut-off apparatus comprises a shut-off organ (136; 234) which can be moved with respect to the brush head and is guided in the brush head, on which shut-off organ an actuating member (110; 232) is configured and the actuating member is provided in a neck section between the brush head and the handle section, wherein the actuating member and the shut-off member are configured in one piece, wherein
• the shut-off member (136; 234) comprises two sealing surfaces in the brush head, between which the shut-off member is guided on both sides, and
• the toothpaste supply, channel and outlet opening are matched to one another in their geometry and in the diameter of the channel and outlet opening in such a way that toothpaste can be conveyed from the toothpaste supply via the channel to the at least one outlet opening via a suction process carried out by the user's mouth, wherein the geometry and diameter of the channel and the outlet opening are configured for a slight passage of the toothpaste and a suction pressure applied during the suction process is determined by the roughness of the surface of the channel and of the outlet opening.

2. The toothbrush according to Claim 1, **characterized in that** the toothpaste supply comprises a pressure apparatus, via which a pressure supporting the suction process is exerted on the toothpaste.

3. The toothbrush according to Claim 2, **characterized in that** the pressure apparatus comprises an elastic balloon filled with the toothpaste, the open end of said balloon being in contact with the channel.

4. The toothbrush according to Claim 2 or 3, **characterized in that** the pressure apparatus in the handle section comprises at least one pressure region, in which the volume of the toothpaste supply is reduced by pressure being applied to the pressure region.

5. The toothbrush according to Claim 4, **characterized in that** the grip section is completely made of an elastic material which comprises a shape memory.

6. The toothbrush according to any one of Claims 1 to 5, **characterized in that** the brush head (402) has a tubular outlet channel (406) which protrudes into the toothpaste supply.

7. The toothbrush according to Claim 6, **characterized in that** the tubular outlet channel (406) is connected to an outlet opening of the toothpaste supply via a conical-cone-connection.

8. The toothbrush according to any one of Claims 1 to 7, **characterized in that** a toothpaste cartridge (32) is provided, which is arranged in the handle section for connection to the channel such that it can be exchanged along with its toothpaste contents.

9. The toothbrush according to Claim 8, **characterized in that** the toothpaste cartridge (32) comprises a tamper-evident closure which can be pierced.

10. The toothbrush according to any one of Claims 1 to 9, **characterized in that** the outlet opening is provided on the brush head on the side facing away from the brushes.

11. The toothbrush according to any one of Claims 1 to 10, **characterized in that** the outlet opening in the brush head is arranged between the brushes, wherein individual brushes are arranged inclined relative to the outlet opening.

12. The toothbrush according to any one of Claims 1 to 11, **characterized in that** the handle section and the brush head can be connected to one another via a plug-in rotary connection, in particular a conical-cone-connection.

13. The toothbrush according to any one of Claims 1 to 12, **characterized in that** the handle section comprises a holding section for a second brush head.

14. The toothbrush according to Claim 1, **characterized in that** the shut-off member is movably guided in a rotating and/or sliding manner with respect to the brush head, wherein the shut-off member comprises a planar, cylindrical, frustoconical, ball-shaped or other rotationally-surface-shaped contact surface.

15. The toothbrush according to any one of Claims 1 to 14, **characterized in that** an electric drive is provided for the brush head.

16. The toothbrush according to any one of Claims 1 to 15, **characterized in that** an electric vibration element is provided, which interacts with the toothpaste supply.

17. The toothbrush according to Claim 15 or 16, **characterized in that** a solar element is provided, which completely or partially takes over an electric supply.

## Revendications

1. Brosse à dents (100 ; 200 ; 400) avec une section de manche (102 ; 202 , 204 ; 404) et une tête de brosse (104 ; 206 ; 402) présentant au moins une ouverture de sortie (132 ; 230) reliée à une réserve de dentifrice (112 ; 224 ; 408) dans la section de manche par le biais d'un canal (122 ; 406), dans laquelle il est prévu un dispositif de verrouillage fermant l'ouverture de sortie, le dispositif de verrouillage présente un organe de verrouillage (136 ; 234) mobile par rapport à la tête de brosse et guidé dans la tête de brosse, sur lequel est formé un organe d'actionnement (110; 232) et l'organe d'actionnement est prévu dans une section de cou entre la tête de brosse et la section de manche, dans laquelle l'organe d'actionnement et l'organe de verrouillage sont conçus d'un seul tenant, dans laquelle
• l'organe de verrouillage (136 ; 234) présente deux surfaces d'étanchéité dans la tête de brosse, entre lesquelles l'organe de verrouillage est guidé de part et d'autre, et
• la réserve de dentifrice, le canal et l'ouverture de sortie sont adaptés de telle façon les uns aux autres quant à leur géométrie et au diamètre du canal et de l'ouverture de sortie, que du dentifrice peut être transporté à partir de la réserve de dentifrice vers l'au moins une ouverture de sortie par le biais du canal par une opération d'aspiration exécutée avec la bouche d'un utilisateur, dans laquelle la géométrie et le diamètre du canal et de l'ouverture de sortie sont conçus pour faciliter le passage du dentifrice et une pression d'aspiration appliquée lors de l'opération d'aspiration est déterminée par la rugosité de la surface du canal et de l'ouverture de sortie.

2. Brosse à dents selon la revendication 1, **caractérisée en ce que** la réserve de dentifrice présente un dispositif de pression par le biais duquel une pression soutenant l'opération d'aspiration est exercée sur le dentifrice.

3. Brosse à dents selon la revendication 2, **caractérisée en ce que** le dispositif de pression présente un ballon élastique rempli avec le dentifrice, lequel est en contact avec le canal par son extrémité ouverte.

4. Brosse à dents selon la revendication 2 ou 3, **caractérisée en ce que** dans la section de manche, le dispositif de pression présente au moins une région de pression dans laquelle le volume de la réserve de dentifrice est réduit par une pression sur la région de pression.

5. Brosse à dents selon la revendication 4, **caractérisée en ce que** la section de manche est entièrement constituée d'une matière élastique présentant une mémoire de forme.

6. Brosse à dents selon l'une des revendications 1 à 5, **caractérisées en ce que** la tête de brosse (402) possède un canal de sortie tubulaire (406), lequel fait saillie dans la réserve de dentifrice.

7. Brosse à dents selon la revendication 6, **caractérisée en ce que** le canal de sortie tubulaire (406) est relié à une ouverture de sortie de la réserve de dentifrice par le biais d'une liaison conique.

8. Brosse à dents selon l'une des revendications 1 à 7, **caractérisée en ce qu'**il est prévu une cartouche de dentifrice (32) disposée dans la section de manche pour être reliée au canal de façon à pouvoir être remplacée avec son contenu de dentifrice.

9. Brosse à dents selon la revendication 8, **caractérisée en ce que** la cartouche de dentifrice (32) présente une fermeture inviolable transperçable.

10. Brosse à dents selon l'une des revendications 1 à 9, **caractérisée en ce que** l'ouverture de sortie est prévue sur la tête de brosse sur le côté opposé aux brosses.

11. Brosse à dents selon l'une des revendications 1 à 10, **caractérisée en ce que** l'ouverture de sortie est disposée entre les brosses dans la tête de brosse, dans laquelle des brosses individuelles sont disposées de façon inclinée vers l'ouverture de sortie.

12. Brosse à dents selon l'une des revendications 1 à 11, **caractérisée en ce que** la section de manche et la tête de brosse peuvent être reliées entre elles par une liaison par emboîtement/rotation, en particulier par une liaison conique.

13. Brosse à dents selon l'une des revendications 1 à 12, **caractérisée en ce que** la section de manche présente une section de maintien pour une deuxième tête de brosse.

14. Brosse à dents selon la revendication 1, **caractérisée en ce que** l'organe de verrouillage est guidé de façon à pouvoir se déplacer de façon rotative et/ou de façon coulissante par rapport à la tête de brosse, dans laquelle l'organe de verrouillage présente une surface de contact plane, cylindrique, tronconique, en forme de charlotte sphérique ou de surface de rotation.

15. Brosse à dents selon l'une des revendications 1 à 14, **caractérisées en ce qu'**il est prévu un entraînement électrique pour la tête de brosse.

16. Brosse à dents selon l'une des revendications 1 à 15, **caractérisée en ce qu'**il est prévu un élément vibrant électrique, lequel coopère avec la réserve de dentifrice.

17. Brosse à dents selon la revendication 15 ou 16, **caractérisées en ce qu'**il est prévu un élément solaire assurant entièrement ou partiellement une alimentation électrique.
